# EUROPEAN PATENT APPLICATION

(11) **EP 2 765 256 A1**
(43) Date of publication of application: **13.08.2014**
(21) Application number: 14250025.5
(22) Date of filing: 11.02.2014
(51) Int. Cl.: E04F 15/024, H02G 3/38

(54) **Raised Flooring System**

(30) Priority: 12.02.2013 GB 201302466
(71) Applicant: Cave, Piers St. John Spencer Galliard, Woking, Surrey GU21 2QG (GB)
(72) Inventor: Cave, Piers St. John Spencer Galliard, Woking, Surrey GU21 2QG (GB)
(74) Representative: Whitaker, Iain Mark

(57) **Abstract**

Inter alia the present invention provides a raised flooring system that comprises a plurality of bridging supports (1b) each adapted to bridge between a substantially parallel pair of joists of a floor and having a first upright leg with a foot to mount onto a first of the joists and having, in use, a second upright leg with a foot to mount onto a second of the joists, and a spanning element (2) therebetween over which flooring boards or flooring panels are laid, wherein the system further comprises a services conduit support hanger (31) that is adapted to engage with and hang from the spanning element.

## Description

### Field of the Invention

The present invention concerns improvements in and relating to a system that is adapted to support services conduits such as electrical cables and/ or pipe-work or the like under a raised floor. The system is particularly well suited to use in a raised loft floor where the loft floor is raised above the joists to preserve the recommended depth of loft insulation material in the loft.

### Background to the Invention

Energy efficiency of buildings is a pressing issue that now affects us all. There is increasingly widespread appreciation of the need for better building insulation to combat thermal energy wastage and its associated costs to the environment as well as the direct cost to the property owner or tenant. Alongside cavity wall insulation, loft insulation is the major target for improvement in many homes and a key feature or recommendation point in the now statutory energy efficiency survey that accompanies all residential property transactions in the UK.

UK government and building industry recommendations are for a 270-300mm depth of insulation material to be laid in the loft/ attic between the joists of the loft/ attic floor to reduce loss of inexorably rising internal heat into the loft space and out through the roof. Indeed, Part L of the current UK Building Regulations requires a depth of at least 250mm. Since most joists (also known as ceiling ties) are 75mm or 100mm deep, in general the insulation will need to rise 200mm or more above the top of the joists and thus any flooring subsequently laid over the joists will generally compact the insulation back down by that difference in depth. Such compaction greatly reduces the effectiveness of the insulation, which relies on being un-compacted in order to trap air in pockets and thus should be avoided. In the case of installing permanent loft flooring in the manner of a loft conversion, turning the loft into proper living space, the issue is normally avoided/ addressed by transferring the insulation capability from the floor to the rafters of the roof instead. However, for the more temporary loft flooring that is often installed by home-owners themselves to serve as a platform for storage of belongings in the loft there will generally not be an obligation or desire to expensively line the roof in place of the loft floor.

The compaction of the loft floor insulation is generally ignored until flagged up in a subsequent energy efficiency survey carried out prior to sale of the property. However, this is of course, very energy wasteful and the problem has inspired some consideration in the industry. A primary proposal for addressing the problem is to lay an array of mutually parallel boards/ battens edge-on on top of the joists running orthogonal to the joists and to be nailed down to the joists to provide a raised floor with the insulation filled firstly between the joists and then between the battens. This system is time-consuming to install and, if needed, also time-consuming to uninstall and the upper part of the insulation either needs to be laid separately or be locally crushed where the battens run.

A further proposal to address the compaction problem is outlined in GB 2438620A and entails provision of box beam spacers that are again laid on top of the joists running orthogonal to the joists and to be nailed down with blocks to the joists. With this latter system the box beam spacers are specially constructed having a rectangular box form with opposing sidewalls and top and bottom walls and to achieve the required insulation depth using the system the insulation material must be inserted into the rectangular box form. This system lacks versatility and although it is somewhat less time-consuming to install than the other prior systems it is rendered awkward by the need to fill the insulation firstly between the joists and then into the spacers and between the spacers rather than simply laying it between the joists.

In the existing loft raised floor systems further problems arise when seeking to accommodate for any services conduits such as electrical cables for mains power sockets or for lighting or pipe-work (eg for water supply pipes / central heating pipes) that cross the floor. We have found that managing the latter can best be done when integrated with the rows of the support beams of our raised flooring system so that the services conduits are carried neatly and discretely under the raised loft floor by the beams.

It is a general object of the present invention to provide a system and method for laying a raised floor/ loft floor to address the problem of insulation compaction and which provides for versatile, secure, efficient and cost-effective installation and management of services conduits.

### Summary of the Invention

According to a first aspect of the present invention there is provided a raised flooring system that comprises: a plurality of bridging supports each adapted to bridge between a substantially parallel pair of joists of a floor (particularly preferably a loft floor) and having a first upright leg with a foot to mount onto a first of the joists and having, in use, a second upright leg with a foot to mount onto a second of the joists, and a spanning element therebetween over which flooring boards or flooring panels are laid, wherein the system further comprises a services conduit support hanger that is adapted to engage with and hang from the spanning element.

Preferably the spanning element is an elongate beam with a channel extending therealong and the hanger is adapted to slidingly engage within the channel of the beam to hang therefrom and be slidable along the channel to be positionally adjustable along the length of the beam.

Preferably the beam has a lateral rim/ flange along each longitudinal edge of the channel whereby each rim/ flange projects towards the other over the channel and preferably the hanger has a stem and a head that that is larger than the stem and whereby the head is adapted to be held in the channel by the lateral rims/ flanges. In one embodiment the hanger may have a stem or head with a pair of grooves, one groove on each side, whereby one of the flanges fits into one of the grooves and the other flange fits into the other of the grooves.

The hanger preferably comprises a stem having at least one and preferably a pair of support arms thereon and where the or each arm provides a support ledge on which pipe-work or cabling may be carried. Where there is a pair of support arms these are preferably arranged with one arm extending from each opposing side of the stem or there may be one arm mounted to the stem in such a way that it projects to each opposing side of the stem.

Each arm may be substantially straight/ level and with an upturn/ lip at the end to laterally retain the pipe-work or cabling in place. The support arm(s) may be de-mountable from the stem and suitably the stem has a socket into which the support arm mounts.

In a particularly preferred embodiment the support hanger comprises at least a first arm or pair of support arms at a first level along the stem and a second arm or pair of support arms at a second level further down the length of the stem. Preferably the second arm or pair of arms is/ are longer than the first arm or pair of arms. Having the arms at different levels provides multi-tier support whereby, for example, the upper tier may carry electrical cable while the lower carries a water pipe.

In an alternative preferred embodiment of the invention the hanger may be formed as a saddle having a channel in a lower in use face to fit astride the top and sides of a said spanning element to hang therefrom and the channel of the hanger being slidable along the spanning element for the hanger to be positionally adjustable along the length of the spanning element.

Preferably each leg is initially separate and the spanning element is an initially separate beam that is mounted to the legs to span between the joists.

Preferably each leg has an integral spanning element portion that extends from an upper end of the leg and towards the other leg in use on which the beam may rest. Preferably the foot of each leg extends from the leg in at least one direction, and preferably both directions, along the corresponding joist to which it is mounted in use. In other words the foot of each leg suitably extends in at least one direction substantially orthogonal to the spanning element portion of the leg.

In a further aspect of the present invention there is provided a raised support system or raised flooring system that comprises: a plurality of support legs adapted to raise services conduits to bridge between a substantially parallel pair of joists of a floor and having a first upright leg with a foot to mount onto a first of the joists and having, in use, a second upright leg with a foot to mount onto a second of the joists, wherein the system further has at least one services conduit support arm projecting from at least one of said legs and positioned below the top of the leg to provide a support ledge on which pipe-work or cabling may be carried below the level of the floor. Preferably the least one services conduit support arm is mounted to the leg by a socket on the leg. Preferably the leg has a pair of support arms arranged with one arm extending from each opposing side of the stem or one arm that projects to each opposing side of the stem. Preferably the or each arm is substantially level and with an upturn/ lip at the outer end to laterally retain the pipe-work or cabling in place. Preferably the support hanger comprises at least a first arm or pair of support arms at a first level along the stem and a second arm or pair of support arms at a second level further down the length of the stem. Preferably the second arm or pair of arms is/ are longer than the first arm or pair of arms.

### Brief Description of the Drawings

Preferred embodiments of the present invention will now be more particularly described by way of example with reference to the accompanying drawings, wherein:
**Figure 1** is a perspective view of the services conduit support system of a first preferred embodiment of the invention suitable for use in a loft raised flooring system;
**Figure 2** is a perspective view of a pair of support legs and spanning beam of the system, while **Figure 3** shows the spanning beam in detail and **Figure 4** shows one of the legs in detail;
**Figure 5** is a detailed view of a position adjustable services conduit support hanger of the system;
**Figure 6** is a further perspective view of the Figure 1 system during assembly as implemented in a loft raised flooring system with the legs standing on joists of the loft and **Figure 7** shows some of the floor panels in place on the legs and a cable and insulated pipe being carried by support hangers on a middle one of the three illustrated rows of legs;
**Figure 8** is a perspective view of a variant of the Figure 1 system wherein the two tier services conduit support hanger is cast or moulded as a one-piece construction and **Figure 9** is a detailed view of that hanger, while **Figure 10** shows that hanger in use in a loft raised floor system, carrying a cable on the upper tier and a pipe on the lower tier
**Figure 11** is a perspective view of a second embodiment of the services conduit support system, having a third form of position adjustable services conduit support hanger and **Figure 12** is a detailed view of that third form of support hanger.
**Figure 13** is a detailed view of a services conduit support that is integral to the raised floor support leg, **Figure 14** shows the support in situ, **Figure 15** shows demountability of the arms of the services conduit support from sockets on the leg,
**Figure 16** shows a single (non-bifurcated) support leg with an integral socket for conduit support arms;
**Figure 17** is a detailed view of a raised floor support leg that has an integral extension foot that may be screwed up or down to raise or lower the height of the leg; and
**Figure 18** is a perspective view of a further variant of the services conduit support hanger being mounted to the channel-shaped beam and **Figure 19** shows this further variant in end elevation, emphasizing grooves along the sides of the head of the hanger which secure the hanger to the beam.

### Description of the Preferred Embodiments

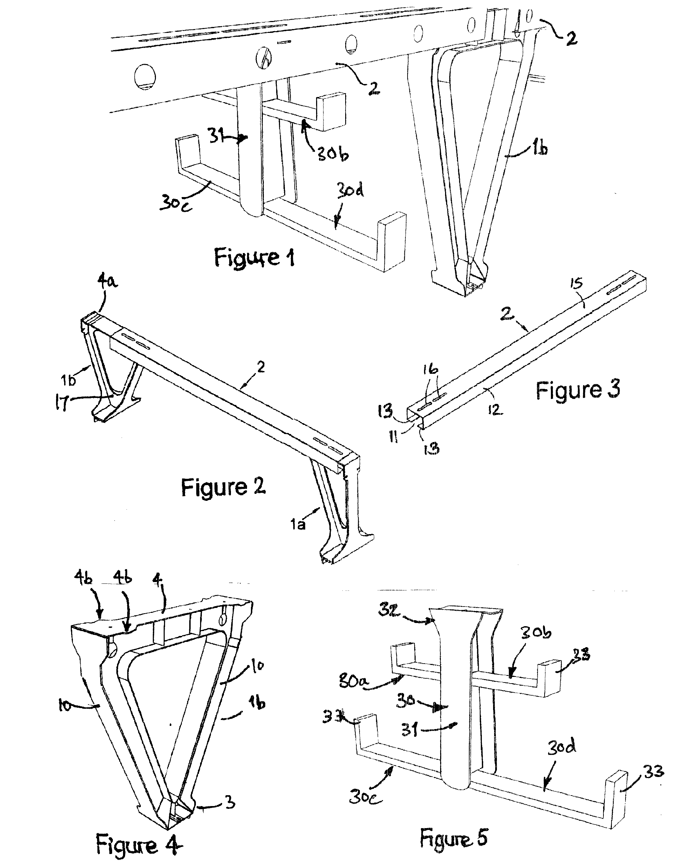

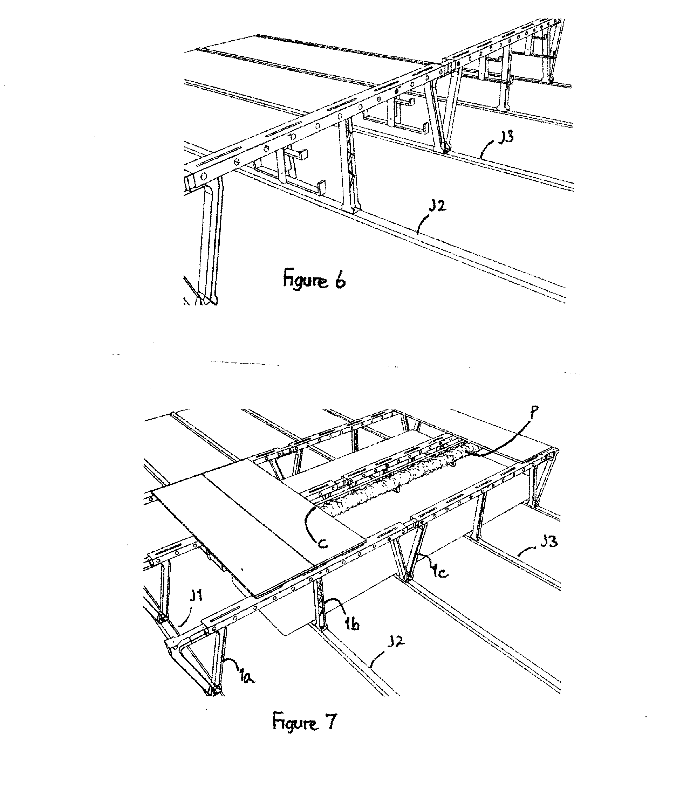

In the illustrated embodiment of Figures 1 to 7 the raised flooring system is substantially as set out in our earlier patent applications including PCT/GB2011/001022 and comprises a plurality of rows of bridging supports 1 as shown in Figure 7.

Each bridging support 1 bridges between the joists J1, J2 of a floor. Each bridging support 1 comprises a pair of legs 1 a, 1b each with a foot 3 to mount to a respective joist J1, J2, with the tops of the legs 1a, 1b being linked in use by a separate spanning element/ beam 2.

The majority of the individual legs 1a, 1b of the bridging support 1 are, as shown in Figure 4, of bifurcated form, splitting into two diverging stems/ uprights 10 at or near the foot 3 of the leg 1a, 1 b and that are relatively wide apart at the top. The upper ends of the leg stems/ limbs 10 each support a respective end of an elongate support platform 4 that spans between the limbs 10 and extends in use orthogonal to the joist J1, J2 to which the foot 3 is mounted.

Referring to Figure 3, the beam/spanning element 2 suitably is a rigid, strong beam of a metal or metal alloy such as steel or similar and has a channel-shaped profile which both strengthens the beam and facilitates its mounting atop the legs 1a, 1 b. The channel 11 of the spanning element/ beam 2 faces downwardly in use and its side walls 12 constrain the spanning element 2 in place on the legs 1a, 1 b against any movement in the direction along the joists J1, J2. The strength of this channel-shaped spanning element/ beam 2 is such that it may meet the floor strength criteria of being able to support approximately double the weight of a 90 kg individual standing upon it and yet is able to do so while having a span 1200mm from a first joist J1 over an intermediate joist to a second joist J2 (that is not the next adjacent joist to the first joist J1) and without need of any support leg on the intermediate joist. Where each bridging support spans two adjacent parallel joists (1200mm span) each bridging support is able to avoid intervening obstructions and as used as a primary/ main component throughout the system it enables a substantially quicker and cheaper installation. For most applications the system supports loadings in excess of 1.4kNm⁻².

The channel-shaped steel profile of the spanning element/ beam 2, as shown in Figure 3, has inverted lateral rims/ flanges 13 along the bottoms of the sidewalls 12, which is to say it has a flange 13 along each lower in use longitudinal edge that projects inwardly to tuck under the spanning element 2 profile and with its ends thus tucking under the platform 4 on the legs 1 a, 1b, there slotting into provided grooves 14 or over lateral projecting tabs 4b on the upper part of the legs 1a, 1b and thereby tying the spanning element 2 even more securely to the legs 1a, 1b.

At each end of the spanning element 2 there is a pair of elongate slot fixing apertures 16 in the top, in use, support wall 15 of the spanning element 2. These fixing apertures 16 allow a screw or other fixing to be driven therethrough into the underlying supporting leg top/ platform 4 to fix the spanning element 2 in position. The slotted and plural nature of these fixing apertures 16 gives the installer a useful degree of flexibility in the positioning of the spanning element 2 end on the leg 1 a, 1b in the direction orthogonal to the joist J1, J2 enabling the installer to adjust for variance in the inter-joist separation from the standard 600mm et cetera, when nailing the spanning element 2 to the leg 1a, 1 b. This positional adjustability is further enhanced by the configuration of the leg top/ platform 4. This has an elongate form configured to extend in both directions orthogonal to the median./ central vertical axis of the leg 1 a, 1b and to the joist J1, J2 and including projecting out over the void between the joists J 1, J2.

The leg top/ platform 4 serves as an integral spanning element portion that extends from an upper end of the uprights/stems 10 of the leg and projects towards the other leg in use and on which the spanning element/ beam 2 is rested/ supportively mounted. The integral spanning element portion/ platform 4 projects over the channel between the joists J1, J2. It is notably orthogonal to the foot 3 on the leg 1 a, 1b, since the foot 3 extends from the leg 1a, 1 b in both axial directions along the corresponding joist J1, J2 to which it is mounted in use. This arrangement allows the leg to have an optimally compact yet optimally strong, stable form with the further desired characteristic of positioning adjustability for the spanning element 2.

The platform/ top surface 4 of each leg 1a, 1b on which the spanning element 2 mounts is shown in Figure 2 as having a dip/ recess 4a into which the nail or other fixing to secure the element 2 to the leg may be driven so that the spanning element may be tightened down onto the platform, compressing into the dip/ recess, giving greater hold onto the leg. Strength of the legs 1 a, 1b is aided not only by their bifurcated structure but also by their having a medial rib/ flange 17 running therealong, on the underside thereof, whereby the leg 1 a, 1b has an approximately T-shaped form, as viewed in transverse section (horizontal section of the uprights/ stems 10). Indeed the medial rib/ flange 17 suitably extends substantially the length of the leg uprights/ stems 10 and the length of the platform 4 too. Each leg 1 a, 1b is suitably moulded entirely of a tough, strong, plastics material such as nylon. Thereby or otherwise it suitably has a foot that is partly or wholly of plastics whereby the foot counters cold-bridging. The foot 3 might be demountable but preferably, as illustrated, is integral to the leg 1a, 1 b.

From Figure 7 it will be seen that the flooring system is installed as a plurality of rows each traversing the joists J1,J2, the rows being parallel to each other but the rows not being inter-connected other than ultimately by the overlying floor panels/ boards - ie having no supportive spanning element or other structural member below the floor panels/ boards linking from one row to the next. (The floor panels/ boards 18 that mount on top of the spanning elements/ support beams 2 spanning over them are not shown in Figure 6 but are shown in Figure 7). The structure/ configuration of the legs 1 a, 1 b provides them with sufficient strength and stability that the system does not need structural members spanning between the rows of beams 2 at the beams or at the legs. In the example installation of Figure 7 three rows of bridging supports 1 are shown, each row having a first bridging support 1 comprising two support legs 1a, 1b joined together by a spanning element / beam 2 and the second support leg 1 b extending to form a second bridging support 1 by being joined to a third leg 1 c and so forth. For the average loft there will be of the order of a dozen or more joists and, of course, the process of assembly and installation of the bridging supports making up the row traversing all of the joists will follow this simple assembly pattern but be repeated as necessary. Similarly the process is repeated for each successive row to build up the whole floor. The steps for assembly are quick to execute and the array of parallel rows covering the loft floor area can be completed in little time and at modest cost.

To carry the cabling and pipe-work in the embodiment of Figures 1 to 7 each beam 2 can co-operatively engage with a respective one of a set of services conduit support hangers 30 that are adapted to hang from the beam 2. The support hangers 30 as seen in Figures 1, 5, 6 and 7 have support arms 30a-d to carry the cables or pipe-work.

Each support hanger 30 of this embodiment has a stem 31 that extends vertically down from the beam 2 in use and with an enlarged head part 32 at the top of the stem 30 that couples with the beam 2 by the head 32 sitting in the channel of the beam 2 and the narrower stem 30 extending down through the gap between the flanges 13 that project from the channel's sidewalls. The support hanger is thus adapted to slidingly engage within the channel of the beam 2 to hang from the beam 2 and be slidable along the channel to be positionally adjustable along the length of the beam 2. The stem 31 has four support arms 30a-d projecting laterally outwardly to provide horizontal support shelves in use. Each arm 30a-d is substantially straight and with an upturn/ lip 33 at the end to laterally retain the insulated pipe-work P or electrical cabling C in place (Figure 7).

The hanger 30 illustrated has two pairs of support arms 30a,b and 30c,d. Each pair is arranged at a respective level along the length of the stem 31 with one arm 30a of the pair extending perpendicularly from one side of the stem 31 and the other arm 30b of the pair extending perpendicularly from the other side of stem 31. The first pair of support arms 30a, 30b are at a first, upper in use, level along the stem 31 and the second pair of support arms are at a second level lower down the length of the stem. The second/ lower pair of arms 30c, 30d is longer than upper pair of arms 30a, 30b. Having the arms at different levels provides multi-tier support whereby the upper tier 30a, 30b can carry smaller service conduit such as electrical cable C or small bore piping while the lower carries thicker bore/ insulated pipe P.

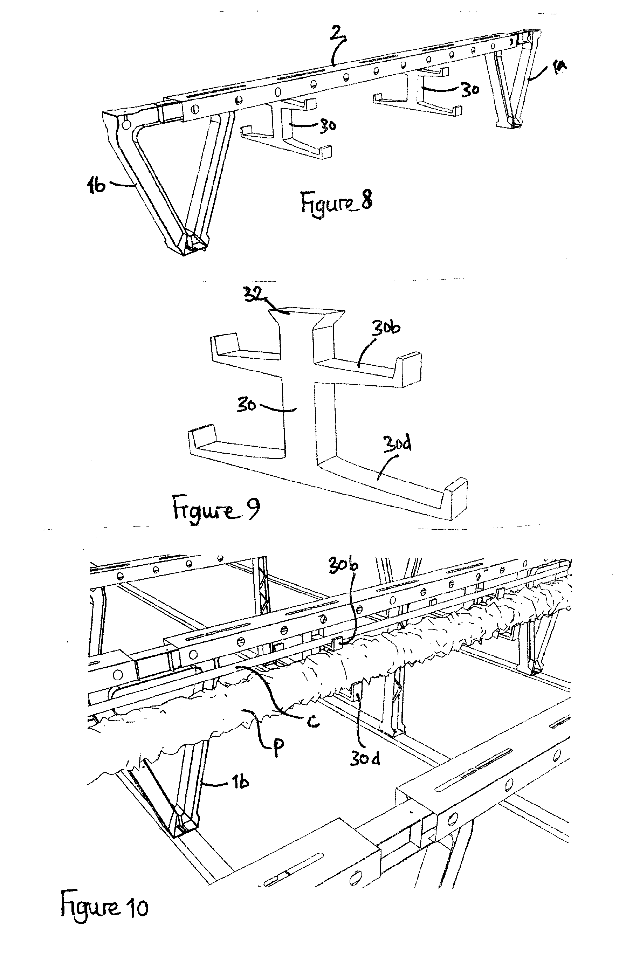

Turning to Figures 8 to 10, the support hanger 30 here is essentially the same as in Figure 1- 7 but formed as a one piece moulding or casting, rather than assembled from several components such as pressed steel plates and extruded bars.

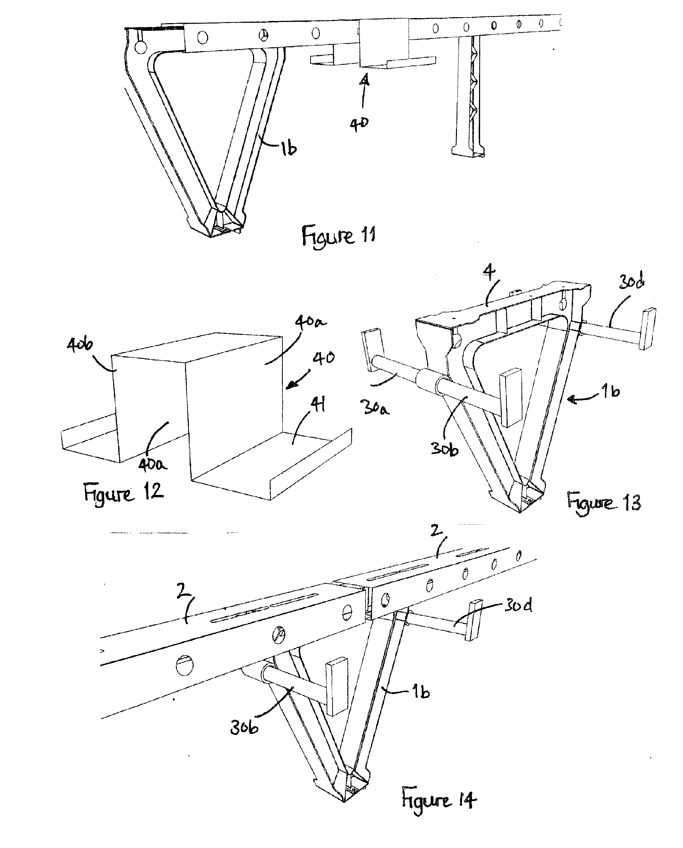

In an alternative preferred embodiment of the invention illustrated in Figures 11 and 12 the services conduit support hanger may be formed as a saddle 40 having a channel 40a in a lower in use face and sidewalls 40b, 40c to sit and fit closely astride the top and sides of the beam/ spanning element 2 to hang therefrom. The saddle 40 and its channel 40a of the hanger are slidable along the spanning element/ beam 2 for the hanger to be positionally adjustable along the length of the beam 2. The sidewalls 40b, 40c of the saddle 40 replace the stem 31 of the hanger 30 of the preceding embodiments. Each of the sidewalls 40b, 40c is at its lower end turned out/ bent to extend horizontally outwardly relative to the beam 2 to define a support arm/ ledge portion 41. The support arm/ ledge portion 41 of the sidewalls 40a, 40b thus replaces the rod/ bar type support arms 30a-d of the preceding embodiments. Alternatively this embodiment could also have rod/ bar type support arms 30a-d, but it is preferable that the sidewalls be turned to form the arms since this provides for a simple, low cost means of production of the hangers, eg pressed/ formed from sheet steel.

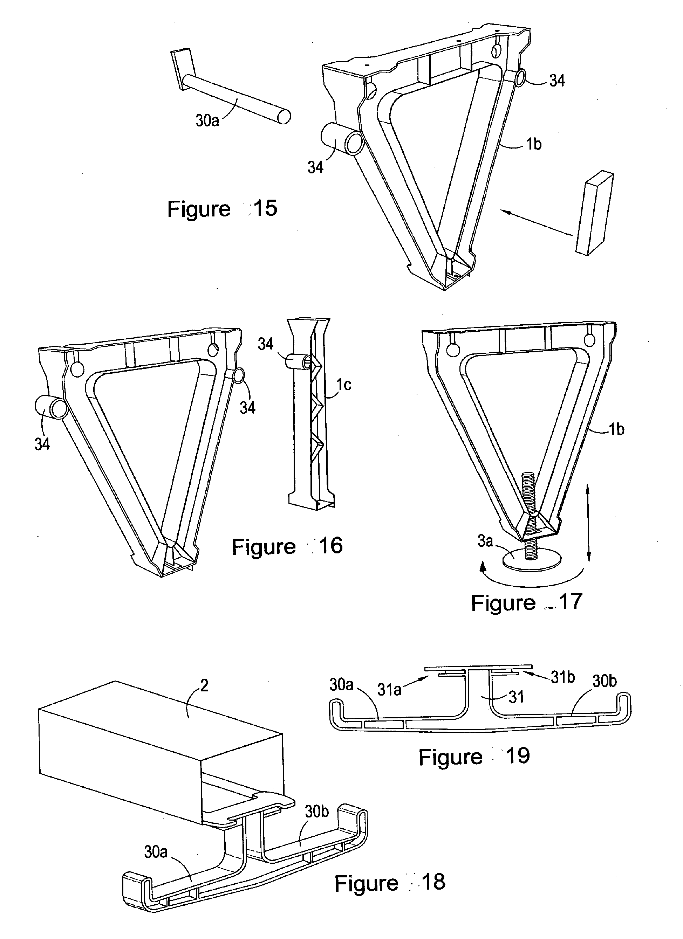

In Figures 13 to 16 the bifurcated/ firiangular form raised floor support leg has two sets of conduit support arms mounted on the support leg, one set on each limb of the bifurcated leg and at a position below the level of the platform part 4. The conduit support arms are thus at a level that is substantially below the level of the raised floor, allowing for sturdy and stable operation in carrying of cables or even relatively large pipe-work below the raised floor and without need for any additional extension mounted on top of the leg to raise the floor above the leg. The support arms are de-mountable from the stem 31, the stem 31 having a respective socket/through-hole 34 into which a support arm 30a mounts. The illustrated arm 30a can be projected through the through hole 34 until it is extending equidistantly from one side and the other, obviating need for a pair of separate opposing arms. This support leg with integral support arm mounts may be used as a primary support for pipes and cables but preferably is used in combination with the beam-mounted support hangers 30 of the preceding and subsequent embodiments. Although illustrated with only a single tier of support arms 30a, there particularly preferably are at least upper and lower tiers just as in the preceding embodiments, to enable carrying cables in an upper tier and pipe-work in a lower tier. The single arm 30a may be replaced by a pair of arms 30a, 30b just as in the preceding embodiments, and the arm(s) 30a might be integrated in the leg 1b if preferred. By way of a further variation, Figure 16 shows a single column/ pillar-like leg 1 c that, like the bifurcated leg 1 b of Figure 15, may be used to carry a support arm 30a extending through a socket/ through hole 34 on the leg 1c. This too may be provided in a number of variants including: with more than one socket 34 on each face; as a multi-tier support; with a pair of back to back sockets 34 rather than a through-hole and thus to receive a pair of arms 30a, 30b; and/ or may have two sets of support arms at each level.

Referring to Figure 17 this shows a raised floor support leg that has an integral extension foot 3a that may be adjusted to adjust the height of the leg. The foot may be screwed up or down to raise or lower the height of the leg.

Referring to Figures 18 and 19, in this embodiment the services conduit support hanger 30 here has a head 31 with a pair of grooves 31 a, 31 b, one groove on each side, whereby one of the flanges 13 of the beam 2 fits into one of the grooves 31 a and the other flange 13 fits into the other of the grooves 31 b to provide a relatively more rigid fixture of the services conduit support hanger 30 to the beam 2.

The invention is not limited to the embodiments above-described and features of any of the embodiments may be employed separately or in combination with features of the same or a different embodiment and all combinations of features to produce a loft raised flooring or a raised conduit support system within the scope of the invention.

## Claims

1. A raised flooring system that comprises: a plurality of bridging supports each adapted to bridge between a substantially parallel pair of joists of a floor and having a first upright leg with a foot to mount onto a first of the joists and having, in use, a second upright leg with a foot to mount onto a second of the joists, and a spanning element therebetween over which flooring boards or flooring panels are laid, wherein the system further comprises a services conduit support hanger that is adapted to engage with and hang from the spanning element.

2. A raised flooring system as claimed in claim 1, wherein the spanning element is an elongate beam with a channel extending therealong and the hanger is adapted to slidingly engage within the channel of the beam to hang therefrom and be slidable along the channel to be positionally adjustable along the length of the beam.

3. A raised flooring system as claimed in claim 2, wherein the beam has a lateral rim/ flange along each longitudinal edge of the channel whereby each rim/ flange projects towards the other over the channel

4. A raised flooring system as claimed in claim 3, wherein the hanger has a stem and a head that that is larger than the stem and whereby the head is adapted to be held in the channel by the lateral rims/ flanges.

5. A raised flooring system as claimed in claim 3 or 4, wherein the hanger has a stem and optionally also a head, there being a pair of grooves in the stem or head with one groove on each side, whereby one of the flanges fits into one of the grooves and the other flange fits into the other of the grooves.

6. A raised flooring system as claimed in any preceding claim, wherein the hanger comprises a stem having at least one support arm thereon and where the arm provides a support ledge on which pipe-work or cabling may be carried.

7. A raised flooring system as claimed in any preceding claim, wherein the hanger comprises a pair of support arms arranged with one arm extending from each opposing side of the stem or one arm that projects to each opposing side of the stem.

8. A raised flooring system as claimed in any preceding claim, wherein each arm is substantially level and with an upturn/ lip at the outer end to laterally retain the pipe-work or cabling in place.

9. A raised flooring system as claimed in claim 6, wherein the or each support arm is de-mountable from the stem, the stem having a socket into which the support arm mounts.

10. A raised flooring system as claimed in claim 6 or 9, wherein the support hanger comprises at least a first arm or pair of support arms at a first level along the stem and a second arm or pair of support arms at a second level further down the length of the stem.

11. A raised flooring system as claimed in claim 6, 9 or 10, wherein the second arm or pair of arms is/ are longer than the first arm or pair of arms.

12. A raised flooring system as claimed in claim 1, wherein the hanger is formed as a saddle having a channel in a lower in use face with sidewalls to fit astride the top and sides of a said spanning element to hang therefrom and the saddle being slidable along the spanning element for the hanger to be positionally adjustable along the length of the spanning element.

13. A raised flooring system as claimed in claim 12, wherein the hanger has support arms that carry the services conduit in use and the support arms are integral to the hanger.

14. A raised flooring system as claimed in claim 13, wherein the support arms and hanger are formed by being pressed and folded from a sheet or extruded as a unitary body.

15. A raised flooring system as claimed in any preceding claim, wherein each leg is initially separate and the spanning element is an initially separate beam that is mounted to the legs to span between the joists.
